# EUROPEAN PATENT SPECIFICATION

(11) **EP 1 495 400 B1**
(45) Date of publication and mention of the grant of the patent: **29.06.2016**
(21) Application number: 02746314.0
(22) Date of filing: 18.04.2002
(51) Int. Cl.: G06F 9/44

(54) **SYSTEM FOR AND METHOD OF STREAMING DATA TO A COMPUTER IN A NETWORK**
SYSTEM UND VERFAHREN ZUM STREAMEN VON DATEN ZU EINEM COMPUTER IN EINEM NETZWERK
SYSTEME ET PROCEDE POUR LA TRANSMISSION CONTINUE DE DONNEES VERS UN ORDINATEUR DANS UN RESEAU

(43) Date of publication of application: 12.01.2005
(73) Proprietor: Citrix Systems, Inc., Fort Lauderdale, FL 33309 (US)
(72) Inventor: ZIMMERMAN, Myron, Needham, MA 02492 (US); LUSINSKY, Robert, Corona, CA 92879 (US); BUROKAS, Gint, Orland Park, IL 60467 (US); GARELICK, Mike, Oceanside, CA 60467 (US); SANDUSKY, Marc, Aliso Viejo, CA 92656 (US); BUNCH, Kenny, Chesapeake, VA 23330 (US)
(74) Representative: Suèr, Steven Johannes
(86) International application number: PCT/US2002/012272
(87) International publication number: WO 2003/090073

(56) References cited:
- WO-A-01/97016
- US-A- 5 974 547
- US-A- 5 974 547
- US-A- 5 991 542
- US-A- 6 080 207
- US-B1- 6 334 149
- INTEL: "Preboot Execution Environment (PXE) Specification, Version 2.1" INTERNET CITATION, [Online] 20 September 1999 (1999-09-20), XP002402606 Retrieved from the Internet: URL:http://www.pix.net/software/pxeboot/ar chive/pxespec.pdf> [retrieved on 2006-10-11]
- EMBERSON LANWORKS TECHNOLOGIES INC A: "TFTP Multicast Option" IETF STANDARD, INTERNET ENGINEERING TASK FORCE, IETF, CH, February 1997 (1997-02), XP015007874 ISSN: 0000-0003

## Description

### Field of the Invention

The present invention relates generally to the simultaneous transfer of data from a network server to one or more client devices, such as personal computers (PC's), in a network. More specifically, the invention facilitates remote management of client devices by employing virtual disk emulation and broadcasting or multicasting of desired data. In some embodiments, said data includes operating system (O/S), hibernation, and application files which reside on the network server and are used to boot and/or configure the one or more client devices.

### Background of the Invention

Computer networks are commonly used in offices or corporate environments to interconnect personal computers (PCs). With the growth of PC usage has come an increasing demand to share computer files and facilitate administration of each PC after installation. In a network comprised of many PCs, the cost to an organization of having an Information Technology representative physically visit and service each PC can be enormous. In order to reduce these costs, software and computer manufacturers have developed technologies aimed at maintaining software products centrally on a network server and then downloading the desired software, via the network, to each client PC.

Network-centric computing has also imposed new requirements on the PC architecture. Embedded systems are typically small, inexpensive and are designed as dedicated fixed purpose devices. PC's are expandable general purpose computing platforms that can be used for many different roles at different points in their lifetime. Many forms of modem embedded systems are connected to communications mechanisms that allow them to interact with other intelligent connected equipment, by transmitting data packets across the network according to a set of rules called "transport protocols." In order for two computers in a network, such as a server and a client, to communicate with one another, each computer must use the proper transport protocol for the particular network. The present invention employs standard TFTP (trivial file transport protocol) and DHCP (Dynamic Host Configuration Protocol) for network communications.

Designers and manufacturers of embedded intelligent connected equipment are looking for ways to reduce cost and improve manageability & reliability, facilitate deployment and secure intellectual property within these devices. One way to accomplish this is to introduce the ability for the client PC to boot from the network. The purpose of a PC's boot process is to load the necessary operating system components, initialize the hardware devices and present to the user an application. This is a long process and one that under normal conditions needs to consider changes in hardware or software configurations, as well as changes in authorized users. Network booting is better suited to those situations wherein the PC's associated hardware is fixed and the client PC's role does not change frequently. Network booting allows for the removal of the client PC's hard disk and facilitates centralized management of software content. Because current network bandwidth (10/100 Mbs and 1 Gbs) does not approach the speed of a client PC's local hard disk, a remote "cold boot" of an operating system (O/S) in a client PC from a network server is not terribly efficient and can take a great deal of time. Furthermore, bandwidth and network server resources can be further degraded by the additional challenge of attempting to boot simultaneously scores of client devices (a "boot storm".) The lengthy time required to "cold boot" further distracts from the perception and behavior of a typical embedded device. Thus, what is needed is a scalable way to speed up the transfer of desired data from a central repository, such as a network server, to a plurality of client devices in a network.

U.S. Patent No. 6,101,601 to Matthews, et al.*,* discloses an approach to resolving the long boot time associated with remotely booting a client device from a boot image in a network. However, that patent teaches resuming, following a reset of some kind, from a hibernation image stored on each client PC's local storage media. This approach requires any reconfiguration of the desired state of the PC to be performed prior to the hibernation of the client PC, and could possibly run afoul of network bandwidth problems as the server individually transfers a plurality of hibernate images to a corresponding plurality of client PCs in networks with large numbers of client PCs.

U.S. Patent No. 5,974,547 to Klimenko teaches an apparatus for and method of using disk emulation for booting a 32-bit PC operating system (O/S) on a client computer through a networked connection to a server. In particular, that patent teaches a method of switching (on each disk I/O call) between the 32-bit protected mode processing of Windows 9*x* O/S's and the 16-bit real mode used by the BIOS, often referred to as "thunking", until the client's O/S is able to perform networking on its own. The method and apparatus presented therein is particularly suited to booting an O/S such as Windows 95® from a server by downloading a complete image of the software applications desired on the client PC, including the O/S. However, that patent does not envision the use of broadcasting or multicasting of desired data, which in certain preferred embodiments might include a hibernation file, to a plurality of client PCs in the network.

US-A-5,974,547 describes a technique, and specifically apparatus and accompanying methods, for use in a client-server environment for booting an operating system (O/S), such as a 32-bit personal computer (PC) O/S, on a client computer through a networked connection to a server. Specifically, the server stores an image of a client hard disk including the client O/S and desired applications. During a boot process, a procedure, which is compliant with both an interrupt handler in the client and a network driver kernel in the client O/S, is installed in the client. Based on client O/S resources then available when, during the boot process, the client requests a local hard disk access to a particular sector, the procedure will re-direct that request, to the network file server, through a network driver kernel in the client O/S rather than through a client interrupt handler.; Each such request is processed, to provide physical sector read or write access, through my inventive random access trivial file transfer protocol (RATFTP) server executing in the network server. Advantageously, the source of the sectors remains transparent to the client O/S, while it is being booted from a network connection, in lieu of a local hard disk drive. Hence, client hard disk emulation occurs seamlessly and continuously throughout the entire boot process even though, during this process, the client processing mode changes from real to protected and the client O/S resets and gains control of a client network adapter.

The present invention is as claimed in the claims.

### Summary of the Invention

The present invention provides a system for and method of streaming data from a network server to one or more client PCs. The data may be retrieved in a predetermined manner from a plurality of sectors of a storage device associated with the network server. During operation, the one or more client PC's issue a corresponding number of requests for a download of the plurality of sectors. The requests are forwarded to the server, which transparently emulates operation of a local disk at each of the client PCs. The server operates to broadcast or to simultaneously multicast to the requesting clients the desired data from a virtual hard drive associated with the server. The server preferably accepts download requests during a predetermined invitation period, prior to transmitting the desired data.

In certain embodiments, the emulation is affected by executing emulation code resident on each of the client PCs. Preferably; the emulation code is pre-execution boot environment (PXE) code resident on a network interface card (NIC) of each client PC. In alternative embodiments, the emulation is a result of inventive boot code downloaded from the network server which when executed assumes disk access control by an interrupt handling procedure (Int 13h) and requests the desired data. And in yet another embodiment, the emulation is effected at each client PC by executing portions of the O/S (preferably Windows 2000, NT or XP ®) and two inventive drivers downloaded from the network server, which similarly assumes control of the client's network interface and generates requests for desired data.

The streamed data may be broadcast or multicast in simultaneous burst mode from the network server to client PC's requesting a download. Therefore, the data need only be transmitted once from the network server, rather than redundantly to each client PC. As data sectors are received at each client, they are queued into data caches pre-allocated by the inventive drivers. This advantageously allows each client to concern itself with other activities, such as initializing O/S data structures, drivers and/or applications.

In certain embodiments, the present invention provides a system for and method of booting an O/S on one or more client PCs from a network server employing virtual disk emulation and the streaming method to multicast or broadcast prearranged portions of the disk image from the server to one or more clients. The inventive drivers operate so as to support restoring each client PC to a usable state, in part by accepting a broadcast or multicast portion of the disk image (a plurality of sectors) which collectively comprise O/S files necessary to complete the rebooting process. Requests for disk access in the early stage of the boot process will initially be redirected to the network server from each client using the PXE service. The PXE code will facilitate establishment of the initial virtual connection between each client and the server, allowing the server to be seen as another client drive. The PXE code facilitates downloading of additional emulation code, which in turn downloads O/S code that facilitates downloading of the portions of the disk image to be transmitted. During early phases of the boot process, insufficient O/S components have been loaded and activated to provide client O/S supported network access. Consequently, client hard disk access requests are handled through the Int 13h handler and the downloaded emulation code. Roughly 25% through the boot of the O/S, the O/S will assume control over communications with the server using the inventive drivers, effectively bypassing the need for the BIOS Int 13h services.

In yet another embodiment, the system for and method of fast booting an O/S on one or more client PCs from a network server makes use of a hibernation file. In these embodiments, the streamed data includes, among other things, a hibernation file including a hibernation image and several O/S files. Although the streaming process itself does not rely at all on hibernation functionality, the one or more client PC's of these embodiments obviously must each operate an O/S that supports hibernation. Such systems include Microsoft Windows 2000® and XP®.

The invention advantageously requires less hardware because the client devices may be configured without hard disks. The invention also allows all client PCs to download the same desired data. This translates to easier maintenance of individual client devices since each client is no longer running unique copies of the O/S or the applications. For example, a software upgrade need only be performed on a single disk image or particular group of data sectors, as opposed to any number of individual client PCs. Considering that the streaming data is broadcast or multicast to a plurality of clients, network traffic will be considerably reduced during peak traffic times, such as when a great number of clients are attempting to boot together. The solution provided herein, therefore, is highly scalable, as very few additional system resources will be necessary to boot an increasing number of client PC's.

### Brief Description of the Drawing

**Figure 1** is a block diagram illustrating a client/server network environment in which the present invention may be practiced.
**Figure 2** is a block diagram illustrating a network adapter in accordance one embodiment of the present invention.
**Figure 3** is a block diagram illustrating an embodiment of a portion of a client's local memory after the inventive drivers have been downloaded from a network server and executed.
**Figure 4** is a flowchart illustrating an embodiment of a synchronous streaming process provided by the present invention.
**Figure 5** is a flowchart illustrating an embodiment of a network booting process employing a hibernation image file.

### Detailed Description of Certain Embodiments

Certain preferred embodiments of the invention will now be described with reference to the accompanying drawings.

As used herein, the terms "MBR" (Master Boot Record), "storage driver", and "network filter driver" refer to bootstrapping software modules developed by the Applicants. In order to differentiate software modules developed by persons other than the Applicants, a convention of preceding such modules' names with "O/S" has been adopted. Also, the terms "virtual drive", "boot drive" and "server drive" are used synonymously in the description that follows.

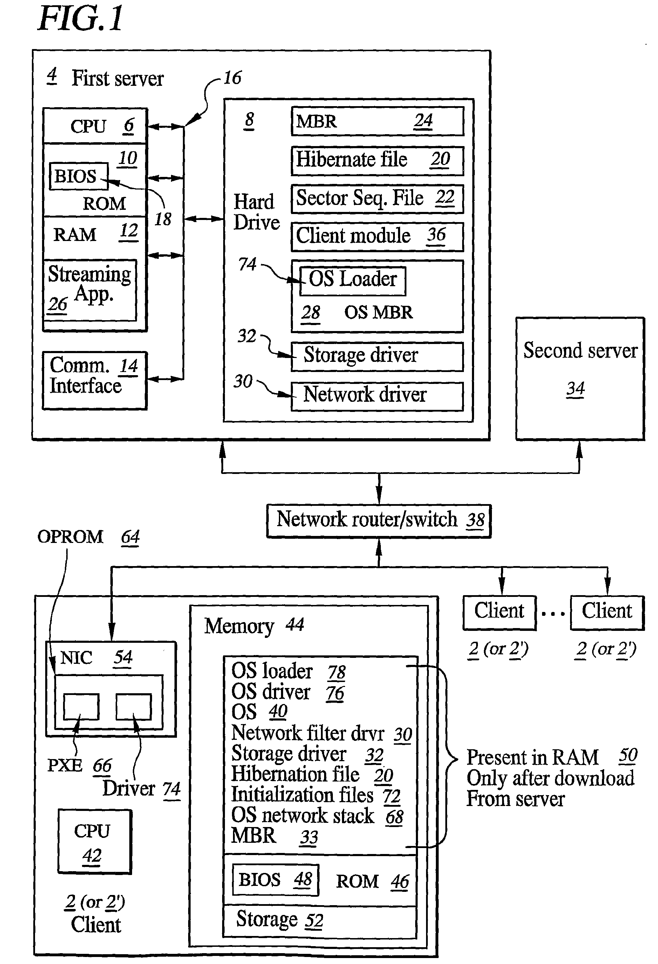

The networked computing environment shown in **Figure 1** may be an enterprise network or client/server configuration, in which any one of the PC's **2** may function as a file server or network server **4.** Network server **4** may be any ordinary type of system, from a relatively small PC to a large mainframe. In the particular embodiments described below, server **4** is a mid-range computer comprised of one or more central processing units (CPUs) **6,** a hard drive **8,** read only memory (ROM) **10** with its own BIOS **18,** random access memory (RAM) **12,** and a network adaptor **14** all coupled together by one or more busses **16.** Those skilled in the art will recognize that the BIOS **18** is a set of basic routines that helps to transfer information between elements within the network server. In certain embodiments described below, the network server hard drive **8** stores O/S files, such as O/S loaders (e.g., NTLDR) or utility function files (e.g., WIN32.SYS) or even one or more hibernation files **20,** a sector sequence file **22,** as well as numerous sets of microinstruction code, such as a MBR **24,** a streaming module **26,** and an O/S MBR **28** including at least a network filter driver **30** and a storage driver **32.**

Optionally, one or more additional servers **34** may be coupled to the network and may communicate with the first server **4** and client PCs **2.** In a multi-server network, a client module **36** (e.g., HPPC) may also reside on the first server **4** and, in response to requests from client devices **2,** specify which additional server **34** contains client addressing information and download information.

The one or more client devices **2** are coupled to the server **4** through a network router or switch **38** in the network. Physical links may assume any of a number of conventional forms, such as cables, switched telephone lines, wireless devices including those operating in radio and infrared spectra, and many others. The client devices and server transfer data to one another using standard network communications protocols. An O/S **40** manages the physical facilities of each client device **2** after a sufficient number of O/S modules and O/S drivers are activated. Each client device is similarly equipped with a CPU **42,** such as the *x*86 family of microprocessors manufactured by Intel Corporation. Each client also includes local memory **44** including ROM **46** storing a BIOS **48,** and RAM **50,** local storage **52,** and a network adapter **54** which are coupled to the CPU by a system bus **56.**

**Figure 1** also illustrates a portion of the client's RAM **50** *after* a sufficient number of sectors have been downloaded and the code they comprise executed. As shown, RAM **50** may contain a downloaded O/S **40,** O/S drivers **76,** O/S loader **78,** O/S utility function file (e.g., WIN32.SYS) **72,** network filter driver **30,** storage driver **32,** and O/S network stack **68.** In some embodiments RAM **50** also contains a hibernation file **20.**

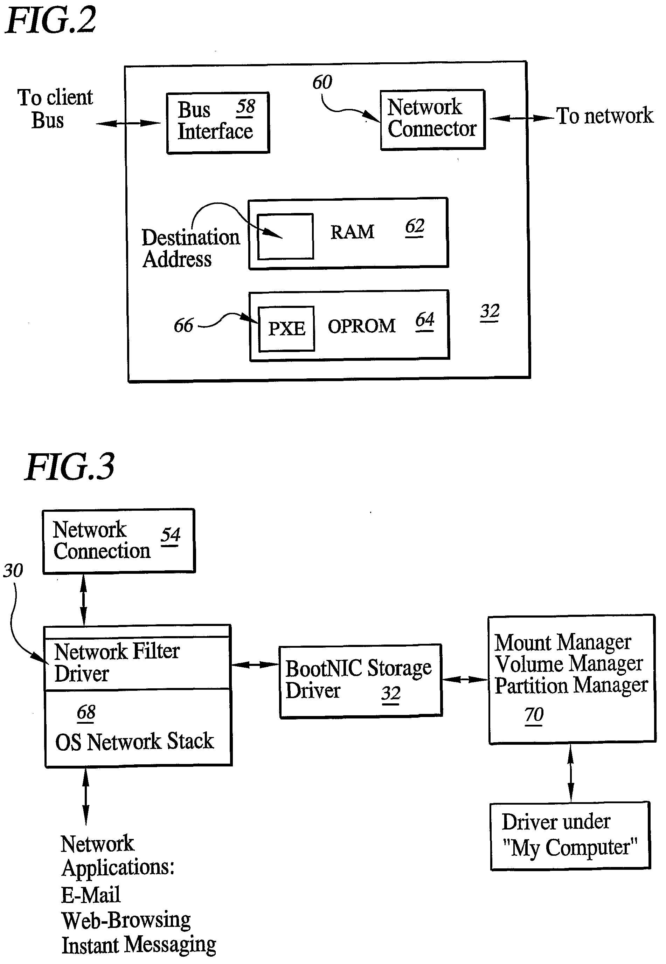

Now referring to **Figure 2****,** the network adapter **54** of each client is preferably a network interface card (NIC) that provides a data link between the hardware of the client and the network. Each NIC **54** includes a bus interface **58** for connecting to the client system bus **56,** and one or more network connectors **60** for connecting to the network, which may comprise a LAN or WAN. Also included on the NIC **54** is random access memory (RAM) **62** for storing the unique destination address of the NIC, as well as an Option ROM (OPROM) **64** storing PXE emulation code **66.** The destination address enables each client **2** to be individually addressed by any other computer in the network.

### SYNCHRONOUS STREAMING OF DESIRED DATA TO A PLURALITY OF CLIENTS

As stated, the present invention provides a system for and method of streaming data from a network server **4** to one or more clients **2** by transparently emulating a local disk and either broadcasting or multicasting the contents of a set of data sectors residing on the server's "virtual" drive **8** in response to read requests issued by the one or more clients **2.** The data may be retrieved in a predetermined manner from a plurality of sectors of a storage device associated with the network server **4.** During operation, a set of one or more clients **2** desiring a particular data download issue requests for the download of a plurality of sectors collectively comprising the desired data. Note that different sets of clients may request download of different data. The requests are forwarded to the server, which transparently emulates operation of a local disk at each of the clients. A streaming module **26** resident on the network server **4** broadcasts or multicasts to the set of requesting clients the desired data from the "virtual" storage device. The streaming module **26** preferably accepts the download requests during a predetermined invitation period, prior to transmitting the desired data.

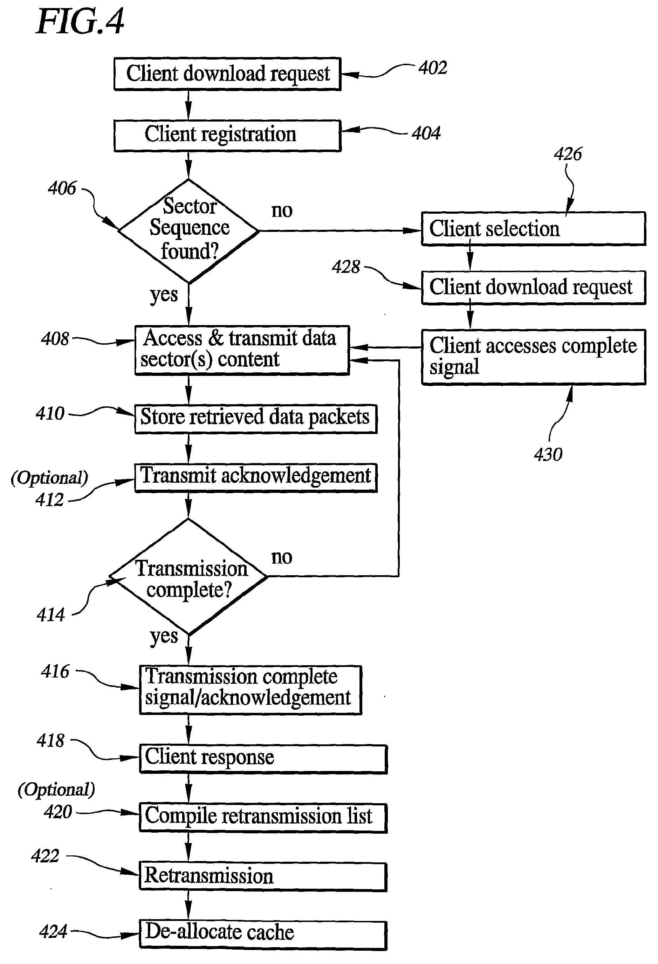

**Figure 4** is a flowchart illustrating a process **400** for synchronous data streaming in accordance with the present invention. Note that the following description is written in terms of a single set of clients desiring a download of the same data. This is to facilitate understanding and in no way is intended to be limiting. Artisans can readily appreciate that the synchronous streaming method can be expanded to allow different sets of clients to request simultaneous downloads of *different* data from the network server.

In **step 402,** each client desiring to download particular data issues an initial request. Desired data may comprise any application files, O/S files, boot programs, or hibernation files residing on the server virtual drive **8.** These requests are issued to the server **4,** while the server emulates a client's local disk **52,** at various stages of boot up, either through the execution of the PXE code **66** and downloaded MBR **33** code, or through execution of O/S MBR **28** code in conjunction with the network filter and storage drivers.

In **step 404,** the streaming module **26** of the server registers each client **2'** issuing an initial request during a predetermined invitation period. Each registered client now waits and listens for data packets from the streaming module **26.**

In **step 406,** the streaming module looks for a sector sequence file **22** on the server **4.** The sector sequence file **22** determines the order in which the streaming module may access and either broadcast or multicast data sectors containing the desired data. If a sector sequence file **22** is not found, program flow passes to a learning process **450** for recording a sector sequence file as described below.

In **step 408,** if a sector sequence file **22** is found, the streaming module **26** will then proceed to broadcast or multicast in burst mode the desired data to the registered clients 2'. Data packets are preferably transmitted at a fixed rate.

In **step 410,** data packets received by each registered client **2'** are stored into fixed-length queues in order to compensate for differences in the transmission rate and client boot process speed. The network and storage drivers will load the received data into a large, temporary section of memory (a "data cache") that they have pre-allocated on each client. Each registered client keeps track of which data packets it has successfully received. This is facilitated by sequentially numbering the transmitted data packets.

In an optional **step 412,** each registered client **2'** may transmit to the server an acknowledgement that the most recent *N* number of packets have been attempted to be successfully received. The goal of the client acknowledgments is to ensure that the local client buffers are not overrun.

In **step 414,** the streaming module **26** determines if all the desired data sectors have been accessed and their contents transmitted. If not, then **steps 408** and **410** are repeated until this is accomplished.

In **step 416,** if all the desired data has been transmitted, the streaming module transmits a message indicating the transmission is complete. However, at this point, not every client may have received all the blocks of information successfully. Some might have dropped packets due to various reasons. Some may have missed the beginning of the transmission.

In **step 418,** each of the registered clients **2'** will respond to the streaming module **26** with a message indicating successful transmission of all the desired data packets, or the need for retransmission of missing packets.

In **step 420,** the streaming module **26** may then compile and efficiently orders a packet retransmission list based upon the response received from the registered clients **2'** indicating a need for unsuccessfully transmitted data packets. Alternatively, the packet retransmission list may be compiled repeatedly after each fixed number of bytes during data packet transmission (prior to **step 414**.)

In **step 422,** the streaming module **26** then may retransmit the needed data packets on an individual basis to the registered clients **2'.** As most clients will be busy processing their received data packets at this time, network bandwidth will be high; therefore individual retransmissions should have no discernable effect on boot time or network traffic.

In **step 424,** after the downloaded data has been successfully processed, the memory previously reserved for the cache is de-allocated.

As mentioned above, an advantage of the streaming process **400** is that, at each client, while that client's O/S may be occupied with initializing O/S data structures, drivers, or applications, future data needs of the O/S will already have been met by preloading the data packets into memory before the O/S has the need for the data. The streaming module **26** broadcasts or multicasts packets to the clients faster than the clients can utilize them, shifting the dependency of boot up time from the data packet transfer time to the client boot process time.

In certain embodiments, the streaming module **26** employs the sector sequence file **22** in determining the order of virtual drive sector contents to be transmitted. It is expected that the sector sequence file **22** will have been stored on the server **4** prior to initiating the synchronous streaming process, but if this has not occurred, the sector sequence file **22** may be generated during the learning process **450** described below.

The learning process **450,** is executed if the streaming module **26** cannot find the sector sequence file **22.** In one embodiment, the sector sequence file is comprised of a list of sectors that the O/S must read in order to complete the transmission of the disk image transmission. In another embodiment, the sector sequence file is comprised not only the list of sectors but also the sequentially stored actual data contained in the listed sectors. In yet another embodiment, the sector sequence file is comprised a single file including a plurality sector lists and corresponding sector data, such that the simultaneous streaming of different data sets to different sets of requesting clients may be supported. A benefit of storing the actual data is that reading a sequential file is much faster than random reads, and it will in turn increase the server's drive throughput and the ability to more efficiently support multiple streams to multiple clients. One result is that the learned actual data can be read exclusively from the sector sequence file until all of the learned data has been transferred to the client. After that point, the server can revert back to using the virtual drive image. In **step 426,** the streaming module **26** selects one client from the set of registered clients **2'.** In **step 428,** the selected client is permitted to make its disk access requests conventionally, while the streaming module records in a new sector sequence file all sector access requests the selected client makes to fulfill its desired data download, and, in certain embodiments, the requested data itself. In **step 430,** the selected client informs the streaming module **26** that it has completed its download. At this point, the new sector sequence file is stored on the virtual drive **8,** and the streaming process is resumed at **step 408.** Described below is a use of the streaming process in network booting applications. If the learning process **450** is required to create a sector sequence file **22** in the context of network booting, the selected client is permitted to boot conventionally, using the inventive MBR **24** and drivers (**30** and **32**)**,** while the streaming module **26** records in a new sector sequence file all sector access requests the selected client makes while booting, and, in some embodiments, the actual data requested.

### BootNIC BASIC ARCHITECTURE

The present invention provides a system for and method of synchronously streaming data, required for client computers to boot quickly, and accessed from data sectors stored on the network server's "virtual" drive. In certain embodiments, the data sectors the client computers wish to download collectively comprise boot programs and O/S files needed to boot. In certain other embodiments, the data sectors may additionally include one or more hibernation files. Each client desiring to download particular data issues an initial request. These requests are issued to the server **4,** while the server emulates a client's local disk **52,** at various stages of boot up, either through the execution of the PXE code **66** and downloaded MBR **33** code, or through execution of O/S MBR **28** code in conjunction with the network filter and storage drivers. Stated another way, in the context of a complete network boot of an O/S on a client, the synchronous streaming process **400** is basically duplicated (with some significant differences) before and after the O/S drivers are initialized. This occurs because the O/S boot process uses interrupt handler processes to download files from the virtual drive **8** during the early portion of the boot process, but later uses the storage driver **32** and network filter driver **30** after they are initialized. This necessitated the need for two solutions to perform essentially similar tasks.

As each client boots, it will initially communicate with the server **4** using PXE service. PXE code **66** will establish an initial emulated "virtual drive" connection between each client and the server. PXE services allow MBR code **33** to pass read requests to the server, thereby allowing boot files or hibernation files **20** residing on the server to be seen by each client's CPU **42** as a plurality of data sectors which could be stored on a local client hard drive **52.** During the early stages of the bootstrapping, emulation is provided by real mode execution of the MBR code **33**, since the BIOS interrupt handler services operate only in real mode. Later in the process, emulation is provided by the O/S kernel code and the storage driver **32** and network filter driver **30** which execute only in protected mode (no "thunking" occurs.)

**Figure 3** illustrates in block form a portion of a client's local memory **44** *after* the network filter driver **30** and storage driver **32** have been downloaded from the network server **4** and executed. The sole responsibility of the network filter driver is to view all data packets being passed from the network through the client NIC **54** to the O/S network stack **68** for those packets that are BootNIC specific, and intercepts said specific data packets from being passed further down the network stack **68 and** instead passes these packets to the storage driver **32.** The storage driver **32** will in turn communicate with Windows' various Managers **70** responsible for storage such as the Mount Manager, Volume Manager, and Partition Manager. If a network data packet is *not* BootNIC specific, then the data packet is passed down the O/S network stack **68** untouched. Those skilled in the art will appreciate that there are three different types of data packets: (1) broadcast packets, which are packets that are addressed to every computer in the network; (2) multicast packets, which are packets that are addressed to more than one, but not necessarily all, of the computers in the network; and (3) directly addressed packets, which are packets that are addressed to a specific client device only. A system according to the present invention may employ any or all of these data packet transmission approaches.

The present invention takes advantage of the widely-adopted specification known as **P**re-Boot E**X**ecution **E**nvironment (PXE), which is a result of an effort to create a predictable, interoperable way for clients to interact with a network in a pre-boot environment (with or without an operating system). The current version of PXE was established as a subset of the Intel®-driven industry initiatives of Wired for Management (WfM). PXE embodies three technologies that establish a common and consistent set of pre-boot services with boot firmware of Intel® Architecture-based systems: (i) a uniform protocol for clients **2** to request the allocation of a network IP address, and subsequently request the downloading of a network bootstrap programs (MBR **24** and O/S MBR **28)** from a network boot server **4;** (ii) a set of APIs available in the pre-boot firmware environment of the client **2** that constitute a consistent set of services that can be employed by the BIOS **48** or bootstrap programs; and a standard method of initiating the pre-boot firmware to execute the PXE protocol on a client PC.

The use of the PXE specification allows, among other things, each client's NIC **54** to serve as a boot device. It also allows the BIOS **48** to make direct use of the NIC code stored on the OPROM **64** before and during the POST process. The present invention, in certain embodiments, optionally takes advantage of the PXE feature of boot server discovery. Using this feature, the booting client **2** can discover an appropriate boot server **4** or **34** from a list of available boot servers provided to the client **2** during the initial phase of the remote boot. Boot server types can be assigned and maintained by an information technology administrator based on the client's system architecture type or even each client's unique ID. PXE uses Dynamic Host Configuration Protocol and Trivial File Transfer Protocol to communicate with the server **4.** When a PXE enabled client boots, it obtains an IP address from a DHCP server **4.** The client **2** may then discover the DHCP server **4,** which provides the client with a list of boot servers. In **Figure 1****,** an additional server **34** is shown, which could act in the capacity of a boot server. In order to facilitate the explanation of the invention, the simultaneous streaming processes are described in the context of a single server **4** network embodiment, and embodiments in which a single set of clients is requesting download of the same data.

Alternatively, BOOTP enabled clients with a static IP address can also be used instead of the DHCP and PXE method, but with the loss of flexibility and ease of configuration.

### STREAMING BOOT FROM A NETWORK HIBERNATION IMAGE

As used herein, the term "hibernate" generally indicates that a PC's power is turned off in such a way that the PC is "paused." While the PC is off, power is removed from all or most of its components. And when the PC is turned back on or "resumed", it is returned to normal operation in the same state in which it was turned off. A "hibernate function", such as is described in U.S. Patent No. 6,209,088 assigned to Microsoft Corp.®, is to be invoked just prior to turning off the PC, interrupting all program execution and saving all PC state information to a "hibernate image" in non-volatile storage. A "resume function" executes from volatile memory, implemented by code that is typically executed from the same executable address space that is used by the O/S and/or application programs initiated by the O/S. In particular embodiments of the invention described below, a "hibernate file" may also comprise O/S files such as O/S drivers and initialization files which are read into the PC's volatile memory prior to initiating the hibernate function.

The present invention, in another aspect, provides an improved system for and method of booting an O/S to one or more clients **2** from a server **4** storing a hibernation image **20** having O/S files for the client PC's. Each client's CPU **42** executes instructions only from addressable memory such as DRAM or some other type of volatile, electronic memory. In order to initialize this addressable memory, a small amount of PXE code **66** is provided in an OPROM **64** on the NIC **54.** The PXE code **66** allows a request to be issued, to the network server **4** emulating a client local disk, to read the MBR code **24.** The downloaded MBR code **33** enables further disk emulation, and requests an initial portion of the O/S MBR **28,** to be transmitted from the server to the client, where it is loaded into DRAM. The O/S MBR **28** is then responsible for downloading and initializing remaining portions of the O/S, which in turn download the hibernation file **20.** Here again, it should be noted that in some systems within the scope of the present invention, different sets of clients may request downloads of different boot files of hibernation files. The Applicants have observed that synchronous streaming reduces by over 50% the time required to boot an O/S **40** over a network, as opposed to a standard O/S local boot.

The hibernation transaction protocol is consists of two halves. The first half comprises generating the hibernation image on the boot drive **8** and the second half is the actual resume from the hibernation image.

Prior to starting the inventive boot up process, the hibernation file **20** residing on the server **4** is generated in a straightforward manner. Once a client PC is configured to a desired state, the hibernate function is employed to create a hibernation image in the hibernation file **20.** The hibernation file **20** is then transferred to the server's boot drive **8.** Alternatively, the hibernation process could be executed such that the hibernation file is saved directly to the server boot drive **8.** Although the hibernate function instructs all drivers to power down, the storage driver **32** only does so at the request of the O/S, after caching WIN32.SYS **72** into local memory **50** and writing the memory contents to the file HIBERFIL.SYS (the file O/S loader checks for validity upon resuming). Another step preferably performed prior to initiating the boot process is storing on the boot drive **8** the MBR **24 emulation** code.

The architecture of Windows® requires two drivers, the storage driver **32** and network filter driver **30**, in order to communicate with the server rather than only one, because drivers are required to take on a "type" and one driver cannot simultaneously be a storage driver and a network driver. Windows 2000 and XP's implementations of hibernation assume only one O/S driver will be required to communicate with the storage device, and, accordingly, provide no mechanism to allow the hibernation process to support more than one O/S driver. Presently available standard O/S drivers will not work because they have not been written to resume from a file over a network. In the standard resume from a local drive, an O/S storage driver is only required to (and only does) know how to communicate with the local hard drive.

The storage driver **32** "hooks" into the dispatch routines of the NIC driver **74** by replacing the dispatch address for a power handler in the NIC driver **74** with the storage driver's own handler. The storage driver **32** may then call the original NIC driver power handler routine.

The booting process is comprised of many steps, but generally speaking involves one program starting another, each more intelligent than the one before. The major steps of the present inventive method are the BIOS initialization, PXE initialization, the MBR loading and Int 13h redirection, the loading of the hibernate image, and the O/S resume. Note that this solution is specific to Windows 2000; however, the steps listed below encapsulate a generic framework for extending the solution to other operating systems.

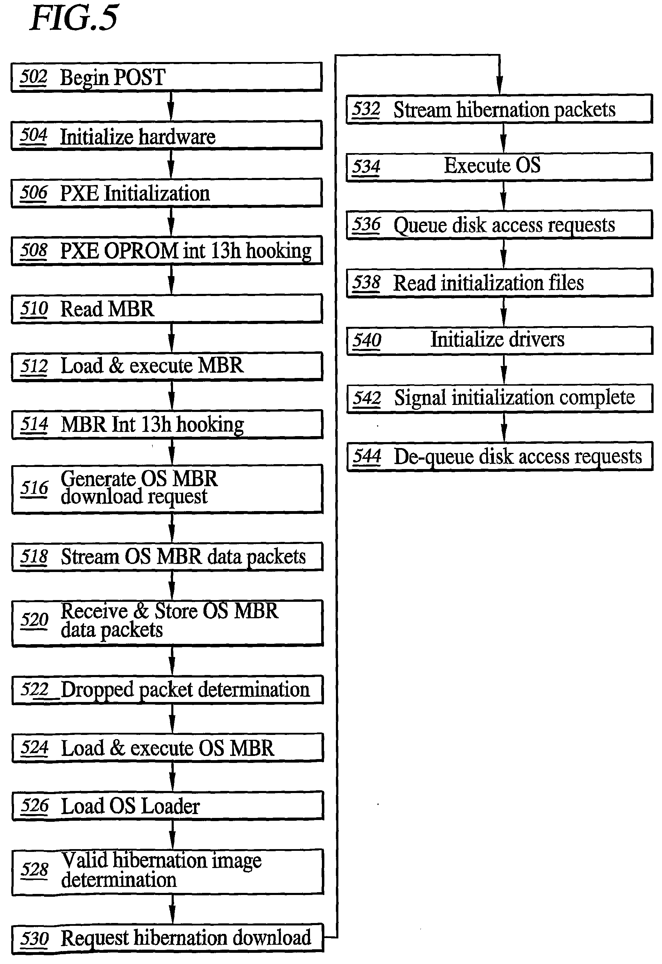

With reference to **Figure 5**, upon powering up, the BIOS **48** initialization of client 2 immediately begins with the execution of a power-on/self-test (POST) sequence (**Step 502**)**.** Each client broadcasts a DHCP discovery request to ascertain its own IP address. The server's O/S, which supports this protocol (and others), returns these parameters as well as the address of a server to boot from, which may or may not be the network server **4.** The virtual boot drive **8** may comprise any nonvolatile storage device associated with the network server **4** (or alternative boot server **34**). Types of drives could include floppy disks, hard disks, magnetic tape, DVD's, CD-ROMs, and flash ROMs. To be a virtual boot drive **8**, a device should hold a copy of a hibernation file containing O/S files, or microinstruction code that is intended to be downloaded.

During the POST, the CPU **42** checks addresses on the bus **56** to determine if an OPROM **64** is present on the client **2.** If it finds an OPROM, the CPU processes any hardware initialization routines located on the OPROM, which initializes the NIC **54** (**Step 504**) to a usable state. The OPROM code then initializes the PXE code **66** (**Step 506**)**.** The OPROM code also "hooks" into the BIOS boot process through the interrupt 13h handler services (**Step 508**) which controls reads and writes to the hard drive **52.** By using the PXE code and assuming control over the NIC **54,** the OPROM **64** code communicates with the server **4** and allows the server's hard drive **8** to transparently emulate a local disk drive **52** of the client **2** through redirection of disk reads and writes to the server.

At the end of the POST sequence, the BIOS **48** will start the booting of the O/S. The BIOS reads the first sector (cylinder 0, head 0, sector 1) of the server's virtual drive **8** (**Step 510**)**.** The first sector stores the MBR **24** (Master Boot Record) that contains additional emulation code to boot the O/S **40.** The MBR **24** code is traditionally provided by the O/S manufacturer, but in order to facilitate the hibernation resume process described below, it was necessary to develop additional emulation code. The MBR code is executed after being loaded into client memory (**Step 512**)**.** The MBR code continues to use PXE **66** to communicate with the network server, and hooks interrupt 13h in order to capture all storage access requests, preventing writes to the server's virtual hard disk **8** (**Step 514**) during the early portion of the boot process. Read requests are preferably processed using the synchronous streaming method **400** described above. Read requests are not passed to the original Int 13h BIOS routine, but instead PXE is used by the MBR to receive data from the network server **4.** Read requests are satisfied by the MBR code, and requests are then returned to the requestor with the data downloaded from the network server. Disk writes are handled differently. The MBR code does not perform writes, but returns a successful write indication to the disk write requestor. Writes are also not passed to the original Int 13h BIOS routine.

The MBR code then proceeds to download an O/S MBR **28** developed by the O/S manufacturer, shown in **Fig 1** as "Windows 2000 MBR". The MBR code **88** at each client **2**, through its hooking of the Int 13h vector, captures all requests for local disk reads before the OPROM **64** has an opportunity to see the requests. The downloaded MBR **88** then forwards, using PXE **66,** the requests to the network server (**step 516**) to download the O/S MBR **28.**

In **step 518**, the network server **4** may synchronously stream data packets that collectively comprise the O/S MBR **28** from the server's virtual drive **8** to each client **2** requesting the O/S MBR download. Streaming module **26** registers for download all clients **2** which make an O/S MBR download request during an invitation period. The invitation period may consist of a predetermined time period that gives all clients an opportunity to register. The streaming module **26** then designates a first client as a Read Requestor. That is, only that client will be allowed to make a read request of the streaming module **26** to transmit to all the registered clients **2'** the contents of the next data sector. The streaming module **26** then accesses and simultaneously transmits to each of the registered clients **2'** the identity of the Read Requestor and the contents of a first sector of a group of sectors on the virtual drive **8** which collectively store the O/S MBR **28.** The streaming module will then determine if all sectors of the O/S MBR group of sectors have been transmitted. If more sectors are required to be transmitted, the streaming module will designate a new Read Requestor client, provided, of course, that there is more than one registered client. Next, the streaming module accesses the next sector and simultaneously transmits its contents with the identity of the new Read Requestor to each of the registered clients **2'.** The step of designating a new Read Requestor is preferably performed in a round-robin fashion, whereby one registered client following each sector transmission round will in turn have responsibility for generating a virtual drive read request while the non-designated clients simply wait for transmitted data. This streaming process **400** is repeated until the entire O/S MBR **28** has been transmitted and subsequently loaded at each client, at which time the downloaded O/S MBR takes control of the network interface **54** and request generation process.

Note that each read request, regardless of which registered client it has come from, will be identical. The read requesting effected by the MBR code may, therefore, proceed in a lock-step fashion. Each read request will be identical because each client will be requesting a read from the same virtual drive and executing the same MBR **28** already downloaded from that virtual drive.

Referring again to **Figure 5****,** in **step 520** each registered client **2'** has received and stored the transmitted O/S MBR sectors. The received data sectors are stored in RAM **50.** Each sector is sent with a sequential number. Each client may then determine (**step 522**) whether the client successfully received all the sectors that were transmitted. If a client is missing a data packet, the client will then asynchronously request from the network server the missing data sector. This data, though, will only be returned to that individual client and not broadcast or multicast to all the registered clients.

In **step 524,** the O/S MBR **28** (*e*.*g*., Windows 2000 MBR) is loaded into each client's memory **50** and executed. The O/S MBR in turns downloads from the virtual drive an O/S loader **74** (*e*.*g*., file NTLDR) **(step 526)** written by the O/S manufacturer. The downloaded O/S loader **78** will check if a valid hibernation image **20** exists on the virtual drive **8** (**step 528**)**.** The virtual drive has previously been set up to contain the valid hibernate image **20.** The O/S loader **78** then begins to load the hibernate image through a series of Int 13h read requests that the MBR **33** will capture and redirect to the network server **4** (**step 530**)**.** The streaming process **400** may again be deployed, on this occasion to access and transmit the contents of a plurality of sectors on the virtual drive **8** that collectively store the hibernation file **20** (**step 532**)**.**

Once the hibernate image has been copied to each client's local memory **44,** the O/S loader **78** passes execution to the O/S **40** restored from the hibernation image, *i.e*., Windows XP or 2000 (**step 534**)**.** Note that, from this point forward, that read requests are not performed in a synchronous manner. Rather, they are transmitted to and answered by the network server on an individual basis.

The O/S **40** now needs to begin waking drivers **76,** such as storage driver **32,** and to perform some initialization to bring the system back to a usable state. One difficulty encountered here is that the storage driver **32** must prevent any reads or writes until the NIC driver **74** and network filter driver **30** have been initialized. However, the network filter driver will not be initialized until the O/S **40** has read the file providing system utility functions (*e.g*., WIN32.SYS). This problem has been solved by the early caching of WIN32.SYS into client memory **50** before creating the hibernation image, thereby making the file a part of the hibernation image itself that has now been read into local memory **50.** Thus, the file WIN32K.SYS can be read from local memory without accessing the virtual drive **8.** With one exception, the storage driver **32** queues all O/S disk write and read requests into a cache also previously allocated during the creation of the hibernation image, and now in the client system's memory **50.** The storage driver **32** simply stores the requests until it's safe to allow the requests to be processed, *i.e*., after the NIC driver **74** and network filter driver **30** have been initialized (**step 536**)**.** The file WIN32K.SYS is read from local client memory and the data is returned back to the O/S (**step 538**)**.**

The O/S **40** then awakens the NIC driver **74** and network filter driver **30** (**step 540**)**.** In **step 542,** the network filter driver **30** informs the storage driver **32** that the NIC **54** has been initialized and that the network filter driver **30** is ready to accept the pending read and write requests. Alternatively, the storage driver **32** may have previously (during the creation of the hibernation image) "hooked" into the NIC driver **74** dispatch function, monitoring its data for "IRP_MJ_POWER". This alerts the storage driver **32** when the network drivers have been awakened. Once the O/S **40** transmits IRP_MJ_POWER to the NIC driver **74,** the request will always be for full power-on. The storage driver **32** will wait for the NIC driver to finish processing the IRP_MJ_POWER, which then means the network drivers have been fully awakened.

In **step 544,** the storage driver then de-queues all the cached read and write requests to restore the O/S **40** to a usable state, after which a user may use the client PC in the normal manner. Note that in this embodiment the storage driver handles reads and writes slightly differently. That is, the storage driver caches locally all writes so that the writes are never committed to the virtual driver, in order that different clients do not simultaneously write to the same virtual image and corrupt it. Conversely, reads are actually read from the virtual drive unless a copy of the needed sector has already been cached on the client. In the latter case, the sector is read from the cache in the client's memory and no network transaction takes place.

Other embodiments of the invention will be apparent to those skilled in the art from a consideration of the specification or practice of the invention disclosed herein. For example, in some embodiments, the synchronous streaming process **400** may be used only in downloading data requested by the interrupt handler processes, or only in the protected-mode accesses of the server. Or the synchronous streaming process **400** may be employed in preloading applications into the clients. Similarly, in other embodiments, booting from a network copy of a hibernation image without the use of the MBR code to synchronize the request and receipt of data packets is within the scope of this invention. It is, therefore, intended that the specification and examples be considered as exemplary only, with the scope of the invention which is as indicated by the following claims.

## Claims

1. A method of streaming data from a first server (4) to one or more client computers (2), the first server (4) in communication with the one or more client computers (2) in a network through a corresponding number of client interfaces (54), the method **characterized by**:
issuing one or more requests to the first server (4) to download contents of a plurality of sectors residing on the first server (4);
wherein the plurality of sectors collectively stores data desired by the one or more computers, and
wherein the first server (4) emulates, in response to the one or more requests, behavior of a disk drive on the one or more client computers (2);
registering each of the client computers (2) from which the first server (4) received a download request during a predetermined invitation period;
determining that a sector sequence file, which determines an order of access to the desired data, does not reside on the first server (4) and then recording the sector sequence file;
wherein recording the sector sequence file further comprises:
selecting a single registered client from among the registered clients;
allowing the selected client to make disk access requests, while recording to a recorded sector sequence file an ordered list of sectors requested by the selected client.
transmitting, by broadcasting or multicasting, the plurality of sectors via the network from the first server (4) to the one or more client computers (2) requesting the download of the plurality of sectors according to a sequence specified in the recorded sector sequence file and such that the actual source of the sectors remains transparent to the one or more client computers (2),
wherein the step of broadcasting or multicasting further comprises:
designating, by the first server (4), in a predetermined order, a different client during each sector transmission from which a request for the next sector is received, until all the sectors are transmitted.

2. The method of claim 1, wherein the server emulation is a result of the one or more client computers (2) executing pre-execution boot environment (PXE) code residing on the one or more client computers (2) and thereby handling disk access operations through an interrupt handler procedure and issuing the one or more requests.

3. The method of claim 2, wherein the desired data is emulation code for emulating a local disk drive and requesting a download of an operating system (O/S) boot file including O/S drivers.

4. The method of claim 1, wherein the server emulation is a result of the one or more client computers (2) executing emulation code received from the first server (4), thereby handling disk access operations through an interrupt handler procedure and issuing the one or more requests.

5. The method of claim 4, wherein the desired data comprises an O/S boot file and O/S drivers for assuming control of the one or more client computers' (2) interfaces to the network and issuing the one or more requests a download of one or more files necessary for the one or more client computers (2) to complete the booting process.

6. The method of claim 5, wherein the one or more files necessary for the one or more client computers (2) to complete the booting process includes one or more hibernation files.

7. The method of claim 1, wherein the server emulation is a result of the one or more client computers (2) executing an 0/S boot file and O/S drivers received from the first server (4) for assuming control over the one or more client computers' (2) interfaces to the network and issuing the one or more requests.

8. The method of claim 7, wherein the desired data comprises one or more files necessary for the one or more client computers (2) to complete the booting process.

9. The method of claim 8, wherein the one or more files necessary for the one or more client computers (2) to complete the booting process includes one or more hibernation files.

10. The method of claim 8, wherein the one or more files necessary for the one or more client computers (2) to complete the booting process includes one or more initialization files.

11. The method of claim 1, further comprising the step of storing the contents of the plurality of transmitted sectors received from the first server (4) in local client memory.

12. The method of claims 7 or 8, further comprising the steps of:
loading the contents of one or more hibernation files into the one or more clients' local memory; and
activating the client O/S processes embodied in the hibernation file(s).

13. The method of claim 1, wherein the desired data comprises one or more application files.

14. The method of claim 1, further comprising the steps of:
storing at each registered client the transmitted sectors received by each registered client;
transmitting from the first server (4) to the registered clients a transmission complete signal;
identifying at each registered client which sectors have been successfully received and stored; and
individually requesting from the first server (4) retransmission of sectors not successfully received and stored.

15. The method of claim 1, wherein the sector sequence file contains a list of all sectors which collectively store one or more 0/S boot files.

16. The method of claim 1, wherein the sector sequence file contains a list of all sectors which collectively store one or more hibernation files.

17. The method of claim 1, wherein the sector sequence file contains a list of all sectors which collectively store one or more application files.

18. The method of claim 1, wherein the first server (4) is in communication with the one or more client computers (2) via one or more buses.

19. The method of claim 1, wherein the request issuing step further comprises the step of obtaining, from a second server, an address of the plurality of sectors residing on the first server (4).

20. The method of claim 19, wherein the first and second servers are the same server or different servers connected to the network.

21. A system for streaming data from a first server (4) to one or more client computers (2), the first server (4) in communication with the one or more client computers (2) in a network through a corresponding number of client interfaces (54), the system comprising:
the one or more client computers (2) each having:
a processor (42);
a memory (44), in communication with the processor (44), for storing executable computer instructions therein;
wherein the processor (44), in response to the instructions:
issues one or more requests to the first server (4) to download content of a plurality of sectors residing on the first server (4), wherein:
the plurality of sectors collectively stores data desired by the one or more client computers (2); and the first server (4) emulates, in response to the one or more requests, behavior of a disk drive on the one or more client computers (2); and
the first server (4) having:
a server processor (6);
a server memory (8; 10; 12), in communication with the server processor (6), for storing executable computer instructions therein;
wherein the server processor, in response to the instructions:
registers each of the client computers (2) from which the first server (4) received a download request during a predetermined invitation period;
determines that a sector sequence file, which determines an order of access to the desired data, does not reside on the first server (4) and then records the sector sequence file;
wherein records the sector sequence file further comprises:
selecting a single registered client from among the registered clients;
allowing the selected client to make disk access requests, while recording to a recorded sector sequence file an ordered list of
sectors requested by the selected client.
accesses the plurality of sectors from a dish drive associated with the first server (4), and transmits via the network to the one or more non-selected registered clients requesting the download, after the predetermined invitation period, the plurality of sectors according to a sequence specified in the recorded sector sequence file and such that the actual source of the sectors remains transparent to the one or more client computers (2), wherein the sequence is based on the one or more requests to increase server performance, and designates, in a round-robin order, a different client during each sector transmission from which a request for the next sector is received until all sectors are transmitted.

22. The system of claim 21, wherein the server emulation is a result of the one or more client computers (2) executing pre-execution boot environment (PXE) code residing on the one or more client computers (2) and thereby handling disk access operations through an interrupt handler procedure and issuing the one or more requests.

23. The system of claim 22, wherein the desired data is emulation code for emulating a local disk drive and requesting a download of an operating system (O/S) boot file including 0/S drivers.

24. The system of claim 21, wherein the server emulation is a result of the one or more client computers (2) executing emulation code received from the first server (4), thereby handling disk access operations through an interrupt handler procedure and issuing the one or more requests.

25. The system of claim 24, wherein the desired data comprises an O/S boot file and O/S drivers for assuming control of the one or more client computers' (2) interfaces to the network and issuing the one or more requests to download a hibernation file.

26. The system of claim 21, wherein the server emulation is a result of the one or more client computers (2) executing an 0/S boot file and O/S drivers received from the first server (4) for assuming control over the one or more client computers' (2) interfaces to the network and issuing the one or more requests.

27. The system of claim 26, wherein the desired data comprises a hibernation file.

28. The system of claim 27, wherein the hibernation file includes one or more initialization files.

29. The system of claim 21, wherein, in further response to the instructions, each processor:
stores the contents of the plurality of transmitted sectors received from the first server (4) in local client storage.

30. The system of claims 27 or 28, wherein, in further response to the instructions, each processor:
loads the contents of the hibernation file into the one or more clients' local memory; and
activates the client O/S processes embodied in the hibernation file.

31. The system of claim 21, wherein the desired data comprises one or more application files.

32. The system of claim 21, wherein, in further response to the instructions, each processor:
stores in local client memory the transmitted sectors received; receives from the first server (4) a transmission complete signal;
identifies which sectors have been successfully received and stored; and
requests individually from the first server (4) retransmission of sectors not successfully received and stored.

33. The system of claim 21, wherein the sector sequence file contains a list of all sectors that collectively store an O/S boot file.

34. The system of claim 21, wherein the sector sequence file contains a list of all sectors that collectively store a hibernation file.

35. The system of claim 21, wherein the sector sequence file contains a list of all sectors that collectively store one or more application files.

36. The system of claim 21, wherein the first server (4) is in communication with the one or more client computers (2) via one or more serial or parallel bus.

37. The system of claim 21, wherein, in further response to the instructions, each processor obtains, from a second server, an address of the plurality of sectors residing on the first server (4).

38. The system of claim 37, wherein the first and second servers are the same server or different servers connected to the network.

## Patentansprüche

1. Verfahren zum Streamen von Daten von einem ersten Server (4) auf einen oder mehrere Client-Computer (2), wobei der erste Server (4) mit dem einen oder den mehreren Client-Computern (2) in einem Netzwerk über eine entsprechende Anzahl an Client-Schnittstellen (54) verbunden ist, wobei das Verfahren durch Folgendes gekennzeichnet ist:
Ausgeben von einer oder mehreren Anforderungen an den ersten Server (4) zum Download von Inhalten aus einer Vielzahl von Sektoren, die sich auf dem ersten Server (4) befinden;
wobei die Vielzahl von Sektoren gemeinsam Daten speichert, die von dem einen oder den mehreren Computern gewünscht werden, und
wobei der erste Server (4) als Reaktion auf die eine oder die mehreren Anforderungen ein Verhalten eines Plattenlaufwerks auf dem einen oder den mehreren Client-Computern (2) emuliert;
Registrieren jedes der Client-Computer (2), von welchen der erste Server (4) während eines vorgegebenen Einladungszeitraums eine Download-Anforderung empfangen hat;
Bestimmen, dass eine Sektorsequenzdatei, welche die Zugriffsreihenfolge auf die gewünschten Daten bestimmt, sich nicht auf dem ersten Server (4) befindet und danach Speichern der Sektorsequenzdatei;
wobei das Speichern der Sektorsequenzdatei ferner Folgendes umfasst:
Auswählen eines einzelnen registrierten Clients aus den registrierten Clients;
Gestatten des ausgewählten Clients, eine Plattenzugriffsanforderung auszugeben, während eine georderte Sektorliste, die von dem ausgewählten Client angefordert wurde, in eine gespeicherte Sektorsequenzdatei gespeichert wird;
Übertragen, durch Broadcasting oder Multicasting, der Vielzahl von Sektoren über das Netzwerk von dem ersten Server (4) zu dem einen oder den mehreren Client-Computern (2), welche den Download der Vielzahl von Sektoren gemäß einer Sequenz angefordert haben, die in der gespeicherten Sektorsequenzdatei spezifiziert ist, und derart, dass die tatsächliche Quelle der Sektoren für den einen oder die mehreren Client-Computer (2) transparent bleibt;
wobei der Schritt des Übertragens durch Broadcasting oder Multicasting ferner Folgendes umfasst:
Bestimmen, durch den ersten Server (4), in einer vorgegebenen Reihenfolge, eines anderen Clients während jeder Sektor-Übertragung, von welchem eine Anforderung für den nächsten Sektor empfangen wird, bis alle Sektoren übertragen worden sind.

2. Verfahren nach Anspruch 1, wobei die Server-Emulation ein Ergebnis des einen oder der mehreren Client-Computer (2) ist, die einen Preboot-Execution-Environment-(PXE)-Code ausführen, der sich auf dem einen oder den mehreren Client-Computern (2) befindet, und dadurch Plattenzugriffsoperationen durch eine Unterbrechungsroutinenprozedur gehandhabt werden und die eine oder die mehreren Anforderungen ausgegeben werden.

3. Verfahren nach Anspruch 2, wobei es sich bei den gewünschten Daten um Emulationscode für das Emulieren eines lokalen Plattenlaufwerks und für das Anfordern eines Downloads einer Betriebssystem-(0/S)-Boot-Datei, einschließlich O/S-Treibern, handelt.

4. Verfahren nach Anspruch 1, wobei die Server-Emulation ein Ergebnis des einen oder der mehreren Client-Computer (2) ist, die Emulationscode ausführen, der von dem ersten Server (4) empfangen wurde, wodurch Plattenzugriffsoperationen durch eine Unterbrechungsroutinenprozedur gehandhabt werden und die eine oder die mehreren Anforderungen ausgegeben werden.

5. Verfahren nach Anspruch 4, wobei die gewünschten Daten eine 0/S-Boot-Datei und O/S-Treiber zur Übernahme der Kontrolle über die Schnittstellen des einen oder der mehreren Client-Computer (2) zu dem Netzwerk und über die Ausgabe der einen oder der mehreren Anforderungen zum Download einer oder mehrerer Dateien umfassen, die dafür notwendig sind, dass der eine oder die mehreren Client-Computer (2) das Boot-Verfahren abschließen.

6. Verfahren nach Anspruch 5, wobei die eine oder die mehreren Dateien, die dafür notwendig sind, dass der eine oder die mehreren Client-Computer (2) das Boot-Verfahren abschließen, eine oder mehrere Ruhezustandsdateien umfassen.

7. Verfahren nach Anspruch 1, wobei die Server-Emulation ein Ergebnis des einen oder der mehreren Client-Computer (2) ist, die eine 0/S-Boot-Datei und 0/S-Treiber ausführen, die von dem ersten Server (4) zur Übernahme der Kontrolle über die Schnittstellen des einen oder der mehreren Client-Computer (2) zu dem Netzwerk und über die Ausgabe der einen oder der mehreren Anforderungen empfangen wurden.

8. Verfahren nach Anspruch 7, wobei die gewünschten Dateien eine oder mehrere Dateien umfassen, die dafür notwendig sind, dass der eine oder die mehreren Client-Computer (2) das Boot-Verfahren abschließen.

9. Verfahren nach Anspruch 8, wobei die eine oder die mehreren Dateien, die dafür notwendig sind, dass der eine oder die mehreren Client-Computer (2) das Boot-Verfahren abschließen, eine oder mehrere Ruhezustandsdateien umfassen.

10. Verfahren nach Anspruch 8, wobei die eine oder die mehreren Dateien, die dafür notwendig sind, dass der eine oder die mehreren Client-Computer (2) das Boot-Verfahren abschließen, eine oder mehrere Initialisierungsdateien umfassen.

11. Verfahren nach Anspruch 1, ferner den Schritt des Speicherns der Inhalte der Vielzahl von übertragenen Sektoren, die von dem ersten Server (4) empfangen wurden, auf einem lokalen Client-Speicher umfassend.

12. Verfahren nach Anspruch 7 oder 8, ferner die folgenden Schritte umfassend:
Laden der Inhalte der einen oder der mehreren Ruhezustandsdateien in den lokalen Speicher des einen oder der mehreren Clients; und
Aktivieren der Client-0/S-Verfahren, die in der/den Ruhezustandsdatei(en) enthalten sind.

13. Verfahren nach Anspruch 1, wobei die gewünschten Daten eine oder mehrere Anwendungsdateien umfassen.

14. Verfahren nach Anspruch 1, ferner die folgenden Schritte umfassend:
Speichern der übertragenen Sektoren, die von jedem registrierten Client empfangen wurden, auf jedem registrierten Client;
Übertragen eines Übertragungsabschlusssignals von dem ersten Server (4) an die registrierten Clients;
Identifizieren an jedem registrierten Client, welche Sektoren erfolgreich empfangen und gespeichert wurden; und
einzelnes Anfordern von dem ersten Server (4) von erneuten Übertragungen der Sektoren, die nicht erfolgreich empfangen und gespeichert wurden.

15. Verfahren nach Anspruch 1, wobei die Sektorsequenzdatei eine Liste aller Sektoren enthält, die gemeinsam eine oder mehrere 0/S-Boot-Dateien speichern.

16. Verfahren nach Anspruch 1, wobei die Sektorsequenzdatei eine Liste aller Sektoren enthält, die gemeinsam eine oder mehrere Ruhezustandsdateien speichern.

17. Verfahren nach Anspruch 1, wobei die Sektorsequenzdatei eine Liste aller Sektoren enthält, die gemeinsam eine oder mehrere Anwendungsdateien speichern.

18. Verfahren nach Anspruch 1, wobei der erste Server (4) über einen oder mehrere Busse mit dem einen oder den mehreren Client-Computern (2) verbunden ist.

19. Verfahren nach Anspruch 1, wobei der Schritt des Ausgebens der Anforderung ferner den Schritt des Erhaltens, von einem zweiten Server, einer Adresse der Vielzahl von Sektoren umfasst, die sich auf dem ersten Server (4) befindet.

20. Verfahren nach Anspruch 19, wobei der erste und der zweite Server derselbe Server oder unterschiedliche Server sind, die mit dem Netzwerk verbunden sind.

21. System zum Streamen von Daten von einem ersten Server (4) auf einen oder mehrere Client-Computer (2), wobei der erste Server (4) mit dem einen oder den mehreren Client-Computern (2) in einem Netzwerk über eine entsprechende Anzahl an Client-Schnittstellen (54) verbunden ist, wobei das System Folgendes umfasst:
der eine oder die mehreren Client-Computer (2) weisen jeweils auf:
einen Prozessor (42);
einen Speicher (44), der mit dem Prozessor (44) verbunden ist, zur Speicherung ausführbarer Computerbefehle darauf;
wobei der Prozessor (44) als Reaktion auf die Befehle:
eine oder mehrere Anforderungen an den ersten Server (4) zum Download von Inhalt aus einer Vielzahl von Sektoren ausgibt, die sich auf dem ersten Server (4) befinden, wobei:
die Vielzahl von Sektoren gemeinsam Daten speichert, die von einem oder mehreren Client-Computern (2) gewünscht werden; und der erste Server (4) als Reaktion auf die eine oder die mehreren Anforderungen ein Verhalten eines Plattenlaufwerks auf dem einen oder den mehreren Client-Computern (2) emuliert; und
der erste Server (4) weist Folgendes auf:
einen Server-Prozessor (6);
einen Server-Speicher (8; 10; 12), der mit dem Server-Prozessor (6) verbunden ist, zur Speicherung ausführbarerer Computerbefehle darauf;
wobei der Server-Prozessor als Reaktion auf die Befehle:
jeden der Client-Computer (2) registriert, von welchen der erste Server (4) während eines vorgegebenen Einladungszeitraums eine Download-Anforderung empfangen hat;
bestimmt, dass eine Sektorsequenzdatei, welche die Zugriffsreihenfolge auf die gewünschten Daten bestimmt, sich nicht auf dem ersten Server (4) befindet und danach die Sektorsequenzdatei speichert;
wobei das Speichern der Sektorsequenzdatei ferner Folgendes umfasst:
Auswählen eines einzelnen registrierten Clients aus den registrierten Clients;
Gestatten des ausgewählten Clients, eine Plattenzugriffsanforderung auszugeben, während eine georderte Sektorliste, die von dem ausgewählten Client angefordert wurde, in eine gespeicherte Sektorsequenzdatei gespeichert wird;
die Vielzahl von Sektoren von einem mit dem ersten Server (4) verknüpften Plattenlaufwerk bewertet und die Vielzahl von Sektoren über das Netzwerk zu einem oder mehreren nicht registrierten Clients, die den Download, nach dem vorgegebenen Einladungszeitraum, der Vielzahl von Sektoren gemäß einer Sequenz anfordern, die in der gespeicherten Sektorsequenzdatei spezifiziert ist, überträgt, und derart, dass die tatsächliche Quelle der Sektoren für den einen oder die mehreren Client-Computer (2) transparent bleibt, wobei die Sequenz auf der einen oder den mehreren Anforderungen basiert, um die Leistung des Servers zu erhöhen, und in einer Round-Robin-Reihenfolge einen unterschiedlichen Client während jeder Sektor-Übertragung bestimmt, von welchem eine Anforderung für den nächsten Sektor empfangen wird, bis alle Sektoren übertragen worden sind.

22. System nach Anspruch 21, wobei die Server-Emulation ein Ergebnis des einen oder der mehreren Client-Computer (2) ist, die einen Preboot-Execution-Environment-(PXE)-Code ausführen, der sich auf dem einen oder den mehreren Client-Computern (2) befindet, und dadurch Plattenzugriffsoperationen durch eine Unterbrechungsroutinenprozedur gehandhabt werden und die eine oder die mehreren Anforderungen ausgegeben werden.

23. System nach Anspruch 22, wobei es sich bei den gewünschten Daten um Emulationscode für das Emulieren eines lokalen Plattenlaufwerks und für das Anfordern eines Downloads einer Betriebssystem-(0/S)-Boot-Datei, einschließlich 0/S-Treibern, handelt.

24. System nach Anspruch 21, wobei die Server-Emulation ein Ergebnis des einen oder der mehreren Client-Computer (2) ist, die Emulationscode ausführen, der von dem ersten Server (4) empfangen wurde, wodurch Plattenzugriffsoperationen durch eine Unterbrechungsroutinenprozedur gehandhabt werden und die eine oder die mehreren Anforderungen ausgegeben werden.

25. System nach Anspruch 24, wobei die gewünschten Daten eine 0/S-Boot-Datei und 0/S-Treiber zur Übernahme der Kontrolle über die Schnittstellen des einen oder der mehreren Client-Computer (2) zu dem Netzwerk und über die Ausgabe der einen oder der mehreren Anforderungen zum Download einer Ruhezustandsdatei umfassen.

26. System nach Anspruch 21, wobei die Server-Emulation ein Ergebnis des einen oder der mehreren Client-Computer (2) ist, die eine 0/S-Boot-Datei und O/S-Treiber ausführen, die von dem ersten Server (4) zur Übernahme der Kontrolle über die Schnittstellen des einen oder der mehreren Client-Computer (2) zu dem Netzwerk und über die Ausgabe der einen oder der mehreren Anforderungen empfangen wurden.

27. System nach Anspruch 26, wobei die gewünschten Daten eine Ruhezustandsdatei umfassen.

28. System nach Anspruch 27, wobei die Ruhezustandsdatei eine oder mehrere Initialisierungsdateien umfasst.

29. System nach Anspruch 21, wobei jeder Prozessor als weitere Reaktion auf die Befehle:
die Inhalte der Vielzahl der übertragenen Sektoren, die von dem ersten Server (4) empfangen wurden, auf einem lokalen Client-Speicher speichert.

30. System nach Anspruch 27 oder 28, wobei jeder Prozessor als weitere Reaktion auf die Befehle:
die Inhalte der Ruhezustandsdatei in den lokalen Speicher des einen oder der mehreren Clients lädt; und
die Client-O/S-Verfahren, die in der Ruhezustandsdatei enthalten sind, aktiviert.

31. System nach Anspruch 21, wobei die gewünschten Daten eine oder mehrere Anwendungsdateien umfassen.

32. System nach Anspruch 21, wobei jeder Prozessor als weitere Reaktion auf die Befehle:
die empfangenen übertragenen Sektoren auf einem lokalen Client-Speicher speichert; von dem ersten Server (4) ein Übertragungsabschlusssignal empfängt;
identifiziert, welche Sektoren erfolgreich empfangen und gespeichert wurden; und
von dem ersten Server (4) eine erneute Übertragung der Sektoren, die nicht erfolgreich empfangen und gespeichert wurden, einzeln anfordert.

33. System nach Anspruch 21, wobei die Sektorsequenzdatei eine Liste aller Sektoren enthält, die gemeinsam eine O/S-Boot-Datei speichern.

34. System nach Anspruch 21, wobei die Sektorsequenzdatei eine Liste aller Sektoren enthält, die gemeinsam eine Ruhezustandsdatei speichern.

35. System nach Anspruch 21, wobei die Sektorsequenzdatei eine Liste aller Sektoren enthält, die gemeinsam eine oder mehrere Anwendungsdateien speichern.

36. System nach Anspruch 21, wobei der erste Server (4) über einen oder mehrere serielle oder parallele Busse mit dem einen oder den mehreren Client-Computern (2) verbunden ist.

37. System nach Anspruch 21, wobei jeder Prozessor als weitere Reaktion auf die Befehle eine Adresse der Vielzahl von Sektoren, die sich auf dem ersten Server (4) befindet, von einem zweiten Server erhält.

38. System nach Anspruch 37, wobei der erste und der zweite Server derselbe Server oder unterschiedliche Server sind, die mit dem Netzwerk verbunden sind.

## Revendications

1. Procédé de diffusion en continu de données à partir d'un premier serveur (4) vers un ou plusieurs ordinateurs clients (2), le premier serveur (4) étant en communication avec le ou les ordinateurs clients (2) dans un réseau par l'intermédiaire d'un nombre correspondant d'interfaces clientes (54), le procédé étant **caractérisé par** les étapes suivantes :
envoyer une ou plusieurs demandes au premier serveur (4) pour télécharger des contenus d'une pluralité de secteurs résidant sur le premier serveur (4) ;
dans lequel la pluralité de secteurs stocke collectivement des données souhaitées par le ou les ordinateurs, et
dans lequel le premier serveur (4) émule, en réponse à la ou les demandes, le comportement d'un lecteur de disque sur le ou les ordinateurs clients (2) ;
enregistrer chacun des ordinateurs clients (2) à partir desquels le premier serveur (4) a reçu une demande de téléchargement durant une période d'invitation prédéterminée ;
déterminer qu'un fichier de séquence de secteurs, qui détermine un ordre d'accès aux données souhaitées, ne réside pas sur le premier serveur (4) puis enregistrer le fichier de séquence de secteurs ;
l'enregistrement du fichier de séquence de secteurs comprenant en outre les étapes suivantes :
sélectionner un client enregistré unique parmi les clients enregistrés ;
autoriser le client sélectionné à faire des demandes d'accès au disque, tout en enregistrant sur un fichier de séquence de secteurs enregistré une liste ordonnée de secteurs demandés par le client sélectionné.
transmettre, par diffusion ou multidiffusion, la pluralité de secteurs par l'intermédiaire du réseau à partir du premier serveur (4) vers le ou les ordinateurs clients (2) demandant le téléchargement de la pluralité de secteurs conformément à une séquence spécifiée dans le fichier de séquence de secteurs enregistré et de sorte que la source réelle des secteurs reste transparente à l'ordinateur client/aux ordinateurs clients (2) ;
l'étape de diffusion ou de multidiffusion comprenant en outre l'étape suivante :
désigner, au moyen du premier serveur (4), dans un ordre prédéterminé, un client différent durant chaque transmission de secteur à partir duquel une demande pour le secteur suivant est reçue, jusqu'à ce que tous les secteurs soient transmis.

2. Procédé selon la revendication 1, dans lequel l'émulation de serveur est un résultat de l'exécution par le ou les ordinateurs clients (2) d'un code d'environnement d'exécution de pré-amorçage (PXE) résidant sur le ou les ordinateurs clients (2), gérant ainsi des opérations d'accès au disque par l'intermédiaire d'une procédure de gestion d'interruption et envoyant la ou les demandes.

3. Procédé selon la revendication 2, dans lequel les données souhaitées sont un code d'émulation pour émuler un lecteur de disque local et pour demander un téléchargement d'un fichier d'amorçage du système d'exploitation (0/S) contenant des pilotes O/S.

4. Procédé selon la revendication 1, dans lequel l'émulation de serveur est un résultat de l'exécution par le ou les ordinateurs clients (2) d'un code d'émulation provenant du premier serveur (4), gérant ainsi des opérations d'accès au disque par l'intermédiaire d'une procédure de gestion d'interruption et envoyant la ou les demandes.

5. Procédé selon la revendication 4, dans lequel les données souhaitées comprennent un fichier d'amorçage 0/S et des pilotes O/S pour prendre le contrôle des interfaces du ou des ordinateurs clients (2) avec le réseau et pour envoyer la ou les demandes pour un téléchargement d'un ou de plusieurs fichiers nécessaires pour que le ou les ordinateurs clients (2) terminent le processus d'amorçage.

6. Procédé selon la revendication 5, dans lequel le ou les fichiers nécessaires pour que le ou les ordinateurs clients (2) terminent le processus d'amorçage comprennent un ou plusieurs fichiers d'hibernation.

7. Procédé selon la revendication 1, dans lequel l'émulation de serveur est un résultat de l'exécution par le ou les ordinateurs clients (2) d'un fichier d'amorçage 0/S et de pilotes O/S provenant du premier serveur (4) pour prendre le contrôle des interfaces du ou des ordinateurs clients (2) avec le réseau et pour envoyer la ou les demandes.

8. Procédé selon la revendication 7, dans lequel les données souhaitées comprennent un ou plusieurs fichiers nécessaires pour que le ou les ordinateurs clients (2) terminent le processus d'amorçage.

9. Procédé selon la revendication 8, dans lequel le ou les fichiers nécessaires pour que le ou les ordinateurs clients (2) terminent le processus d'amorçage comprennent un ou plusieurs fichiers d'hibernation.

10. Procédé selon la revendication 8, dans lequel le ou les fichiers nécessaires pour que le ou les ordinateurs clients (2) terminent le processus d'amorçage comprennent un ou plusieurs fichiers d'initialisation.

11. Procédé selon la revendication 1, comprenant en outre l'étape de stockage des contenus de la pluralité de secteurs transmis provenant du premier serveur (4) dans la mémoire locale du client.

12. Procédé selon la revendication 7 ou 8, comprenant en outre les étapes suivantes :
charger les contenus d'un ou de plusieurs fichiers d'hibernation dans la mémoire locale du ou des clients ; et
activer les processus O/S du client intégrés dans le(s) fichier(s) d'hibernation.

13. Procédé selon la revendication 1, dans lequel les données souhaitées comprennent un ou plusieurs fichiers d'application.

14. Procédé selon la revendication 1, comprenant en outre les étapes suivantes :
stocker dans chaque client enregistré les secteurs transmis reçus par chaque client enregistré ;
transmettre à partir du premier serveur (4) vers les clients enregistrés un signal d'achèvement de la transmission ;
identifier dans chaque client enregistré quels secteurs ont été reçus et stockés avec succès ; et
demander individuellement au premier serveur (4) la retransmission de secteurs n'ayant pas été reçus et stockés avec succès.

15. Procédé selon la revendication 1, dans lequel le fichier de séquence de secteurs contient une liste de tous les secteurs qui stockent collectivement un ou plusieurs fichiers d'amorçage 0/S.

16. Procédé selon la revendication 1, dans lequel le fichier de séquence de secteurs contient une liste de tous les secteurs qui stockent collectivement un ou plusieurs fichiers d'hibernation.

17. Procédé selon la revendication 1, dans lequel le fichier de séquence de secteurs contient une liste de tous les secteurs qui stockent collectivement un ou plusieurs fichiers d'application.

18. Procédé selon la revendication 1, dans lequel le premier serveur (4) est en communication avec le ou les ordinateurs clients (2) par l'intermédiaire d'un ou de plusieurs bus.

19. Procédé selon la revendication 1, dans lequel l'étape d'envoi de demandes comprend en outre l'étape d'obtention, à partir d'un deuxième serveur, d'une adresse de la pluralité de secteurs résidant sur le premier serveur (4).

20. Procédé selon la revendication 19, dans lequel le premier et le deuxième serveurs sont le même serveur ou des serveurs différents connectés au réseau.

21. Système de diffusion en continu de données à partir d'un premier serveur (4) vers un ou plusieurs ordinateurs clients (2), le premier serveur (4) étant en communication avec le ou les ordinateurs clients (2) dans un réseau par l'intermédiaire d'un nombre correspondant d'interfaces clients (54), le système comprenant :
le ou les ordinateurs clients (2) présentant chacun :
un processeur (42) ;
une mémoire (44), en communication avec le processeur (44), pour y stocker des instructions d'ordinateur exécutables ;
dans lequel le processeur (44), en réponse aux instructions :
envoie une ou plusieurs demandes au premier serveur (4) pour télécharger des contenus d'une pluralité de secteurs résidant sur le premier serveur (4), dans lequel :
la pluralité de secteurs stocke collectivement des données souhaitées par le ou les ordinateurs clients (2) ; et le premier serveur (4) émule, en réponse à la ou les demandes, le comportement d'un lecteur de disque sur le ou les ordinateurs clients (2) ; et
le premier serveur (4) présente :
un processeur de serveur (6) ;
une mémoire de serveur (8 ; 10 ; 12), en communication avec le processeur de serveur (6), pour y stocker des instructions d'ordinateur exécutables ;
dans lequel le processeur de serveur, en réponse aux instructions :
enregistre chacun des ordinateurs clients (2) à partir desquels le premier serveur (4) a reçu une demande de téléchargement durant une période d'invitation prédéterminée ;
détermine qu'un fichier de séquence de secteurs, qui détermine un ordre d'accès aux données souhaitées, ne réside pas sur le premier serveur (4) puis enregistre le fichier de séquence de secteurs ;
l'enregistrement du fichier de séquence de secteurs comprenant en outre les étapes suivantes :
sélectionner un client enregistré unique parmi les clients enregistrés ;
autoriser le client sélectionné à faire des demandes d'accès au disque, tout en enregistrant sur un fichier de séquence de secteurs enregistré une liste ordonnée de secteurs demandés par le client sélectionné.
accède à la pluralité de secteurs à partir d'un lecteur de disque associé au premier serveur (4) et transmet par l'intermédiaire du réseau au(x) client(s) enregistré(s) non sélectionné(s) demandant le téléchargement, après la période d'invitation prédéterminée, la pluralité de secteurs conformément à une séquence spécifiée dans le fichier de séquence de secteurs enregistré et de sorte que la source réelle des secteurs reste transparente à l'ordinateur client/aux ordinateurs clients (2), la séquence étant basée sur la ou les demandes d'augmentation des performances du serveur et désigne, dans un ordre de permutation circulaire, un client différent durant chaque transmission de secteur à partir duquel une demande pour le secteur suivant est reçue jusqu'à ce que tous les secteurs soient transmis.

22. Système selon la revendication 21, dans lequel l'émulation de serveur est un résultat de l'exécution par le ou les ordinateurs clients (2) d'un code d'environnement d'exécution de pré-amorçage (PXE) résidant sur le ou les ordinateurs clients (2), gérant ainsi des opérations d'accès au disque par l'intermédiaire d'une procédure de gestion d'interruption et envoyant la ou les demandes.

23. Système selon la revendication 22, dans lequel les données souhaitées sont un code d'émulation pour émuler un lecteur de disque local et pour demander un téléchargement d'un fichier d'amorçage du système d'exploitation (O/S) contenant des pilotes 0/S.

24. Système selon la revendication 21, dans lequel l'émulation de serveur est un résultat de l'exécution par le ou les ordinateurs clients (2) d'un code d'émulation provenant du premier serveur (4), gérant ainsi des opérations d'accès au disque par l'intermédiaire d'une procédure de gestion d'interruption et envoyant la ou les demandes.

25. Système selon la revendication 24, dans lequel les données souhaitées comprennent un fichier d'amorçage O/S et des pilotes O/S pour prendre le contrôle des interfaces du ou des ordinateurs clients (2) avec le réseau et pour envoyer la ou les demandes pour télécharger un fichier d'hibernation.

26. Système selon la revendication 21, dans lequel l'émulation de serveur est un résultat de l'exécution par le ou les ordinateurs clients (2) d'un fichier d'amorçage 0/S et de pilotes O/S provenant du premier serveur (4) pour prendre le contrôle des interfaces du ou des ordinateurs clients (2) avec le réseau et pour envoyer la ou les demandes.

27. Système selon la revendication 26, dans lequel les données souhaitées comprennent un fichier d'hibernation.

28. Système selon la revendication 27, dans lequel le fichier d'hibernation comprend un ou plusieurs fichiers d'initialisation.

29. Système selon la revendication 21, dans lequel en outre, en réponse aux instructions, chaque processeur :
stocke les contenus de la pluralité de secteurs transmis provenant du premier serveur (4) sur un support de stockage local du client.

30. Système selon la revendication 27 ou 28, dans lequel en outre, en réponse aux instructions, chaque processeur :
charge les contenus du fichier d'hibernation dans la mémoire locale du ou des clients ; et
active les processus O/S du client intégrés dans le fichier d'hibernation.

31. Système selon la revendication 21, dans lequel les données souhaitées comprennent un ou plusieurs fichiers d'application.

32. Système selon la revendication 21, dans lequel en outre, en réponse aux instructions, chaque processeur :
stocke dans une mémoire locale du client les secteurs transmis reçus ; reçoit à partir du premier serveur (4) un signal d'achèvement de la transmission ;
identifie quels secteurs ont été reçus et stockés avec succès ; et
demande individuellement au premier serveur (4) la retransmission de secteurs n'ayant pas été reçus et stockés avec succès.

33. Système selon la revendication 21, dans lequel le fichier de séquence de secteurs contient une liste de tous les secteurs qui stockent collectivement un fichier d'amorçage O/S.

34. Système selon la revendication 21, dans lequel le fichier de séquence de secteurs contient une liste de tous les secteurs qui stockent collectivement un fichier d'hibernation.

35. Système selon la revendication 21, dans lequel le fichier de séquence de secteurs contient une liste de tous les secteurs qui stockent collectivement un ou plusieurs fichiers d'application.

36. Système selon la revendication 21, dans lequel le premier serveur (4) est en communication avec le ou les ordinateurs clients (2) par l'intermédiaire d'un ou de plusieurs bus en série ou en parallèle.

37. Système selon la revendication 21, dans lequel en outre, en réponse aux instructions, chaque processeur obtient, à partir d'un deuxième serveur, une adresse de la pluralité de secteurs résidant sur le premier serveur (4).

38. Système selon la revendication 37, dans lequel le premier et le deuxième serveurs sont le même serveur ou des serveurs différents connectés au réseau.
